# EUROPEAN PATENT SPECIFICATION

(11) **EP 1 269 128 B1**
(45) Date of publication and mention of the grant of the patent: **08.08.2012**
(21) Application number: 01915550.6
(22) Date of filing: 30.03.2001
(51) Int. Cl.: G01J 3/52

(54) **COLOUR SPECIFICATION**
FARBSPEZIFIZIERUNG
SPECIFICATION DE COULEURS

(30) Priority: 04.04.2000 GB 0008102
(43) Date of publication of application: 02.01.2003
(73) Proprietor: J & P Coats, Limited, Glasgow G2 5PA (GB)
(72) Inventor: DORNAN, Robert, Erskine, Strathclyde PA8 6HP (GB); DURNIAN, Anthony, Edward, Renfrew, Strathclyde PA4 0AR (GB)
(74) Representative: Jones, Bruce Graeme Roland
(86) International application number: PCT/GB2001/001431
(87) International publication number: WO 2001/075406

(56) References cited:
- GB-A- 2 296 102
- US-A- 4 966 461
- US-A- 5 428 720
- F.W.BILLMEYER: "survey of color order systems" COLOR RESEARCH AND APPLICATION, vol. 13, no. 4, August 1987 (1987-08), pages 173-186, XP002173156

## Description

This invention relates to colour charts.

Colour charts are prepared by manufacturers of paints, inks, dyestuffs and coloured products as diverse as motor vehicles and sewing threads. Usually, they are published as printed colours, laid out in some sort of array, on paper, but swatch cards are also produced by, for example, manufacturers of fabrics, laminates and so forth in which the colours are shown on the fabric or laminate itself. The colours are selected in accordance with the preferences of an individual or panel of people, perhaps after some market research, and assigned more or less fanciful names such as Nile Green or Dusky Peach. Disclaimers are often made as to the reproducibility of the chart colours, especially in regard to the differences brought about by application to the intended substrate as compared with the chart colour on its paper substrate.

Some colour charts, comprehensive enough to be termed colour libraries' are necessarily arranged in some kind of logical order. Among these may be mentioned the CIELAB colour model, and the Pantone, Scott Dic and Munsell systems. At least one of these libraries has been transferred from the physical samples to an electronic version in which the colours are stored as brightness, hue and chroma values for displaying a colour on a colour monitor. A problem with electronic representation, of course, can be appreciated by casual observation of television sets in a dealer's window - not all the sets will be showing the same colour, despite receiving the same signal.

A shortfall of all of these systems is that by no means all available colours are represented. Even though, typically, there may be some 1700 colours in such a library, manufacturers are not infrequently asked for 'specials', colours not represented by chart colours.

In "The CIE 1976 Colour-Difference Formulae, by Alan R Robertson, Colour Research and application, John Wiley and Sons, new York, volume 2, Number 1, Spring 1977, various features of two approximately uniform colour spaces and associated colour-difference formulae are discussed and compared.

Publication "Acceptability and Perceptibility Decisions using the CMC Color Difference Formula" by Roderick Mc Donald, J S p. Coats LTd., Anchor Mills, Paisley, Scotland, disclosed on Figure 4 a 2D slice of a color space populated by CMC color values.

The present invention provides methods for preparing colour charts, colour charts prepared by such methods and apparatus for displaying colour charts and colours therefrom that do not suffer the disadvantages of prior art charts and their display and which have considerable advantages to those concerned with the specification or production of colour and coloured articles.

The invention comprises, in one aspect, a method for preparing a colour chart as set out in claim 1

The preselected colour difference value may be at least one CMC value and may desirably be in the region of two CMC values.

A CMC value (as specified by the Colour Management Committee) is a trade-wide adopted standard for colour differentiation. It is defined as the difference, in CIE colour space, comprising differences in hue, chroma and lightness, between a specified and an achieved colour, as specified by the CMC formula. It renders numeric measures of colour difference which are generally accepted as being visually uniform i.e. the same magnitude of CMC value is the same colour difference irrespective of the colour.

Whilst it is possible to contemplate charts for green, red or other subsets of the entire gamut of colour, the invention is most meaningful when the whole gamut is covered. The reference colour, then, may be the deepest possible black, or the purest and brightest possible white.

This method of specifying colours fills the colour space extending from deepest black to brightest white, and encompassing red, green, yellow and blue, with approximately 17000 colours. There is little or no point in specifying finer differences than are commercially only just distinguishable. The number is larger - far larger than any other commercial colour chart - but manageable. Because of the structure of the chart, it lends itself to an orderly, objective, rather than subjective, identification of the colours. While many systems could be devised, a straightforward, easily understandable system is to label each colour with an alphanumeric code of the form AA123. The potential range of available code numbers is 676000, which is far larger than is required for the 17000 or so colours of the full chart, so there is perhaps, room for interpolation, should it for any reason be desired to add further colours. On this basis, jet black could be represented as AA000 and whitest white by ZA000.

The invention also comprises a colour chart as set out in claim 8 The reference colours may be white, black, or, indeed any other colour and the range may comprise those colours in the colour space which are spaced from an adjacent colour by at least one CMC value, preferably by about two CMC values, e.g. 1.8 or 2.2 CMC values.

Of course, it would not be possible to make any meaningful colour chart for the whole of colour space on a single sheet of paper. Rather, sub-ranges can be indicated, using the labelling method outlined above, by the alpha part of the code on a segment of a circular colour map, and the chart proper can be on a page-by-page basis for colours represented by codes beginning AA, AB, AC, ... BA. BB, BC, ...ZA, ZY, ZZ.

Obviously, such a "chart" could run to 676 pages, and might be unmanageable for many purposes. The chart can, however, be represented digitally for display via a programmed computer on a colour monitor, and the invention also comprises apparatus for displaying a colour chart as set out in claim 14

Having regard to the problems of displaying colours alluded to above, it is preferred that the monitor is calibratable, both internally to itself and externally to the computer, so that the colour actually displayed corresponds to the specified colour. The monitor can be calibrated with reference to standard colours by means of a colorimeter. Rather than resort to the usual colour adjustments available on colour monitors, it may be that the colour signals sent between the computer and the monitor are adjusted (the adjustments being, for example, stored in a database which is consulted each time a colour signal is transmitted) by means of a feedback from the colorimeter.

In much the same way, a colour printer can be calibrated to print colours which match the screen colours or a set of standard colours.

While the measures described above can be used to produce a colour chart and to display its colours accurately on screen or printed on to paper, there remains the problem of producing the finished product, be it a textile product, a ceramic, a leather, a laminate or whatever, which involves the production of an appropriate colorant which it will perfom on the substrate to which is will be applied. Textile dyestuffs, for example, will yield different colours on different substrates, for example, substrates having different textures. This problem can also be addressed in conjunction with the invention.

In another aspect, then, the invention comprises apparatus as aforesaid in which the computer contains a database of colour recipes from which a particular recipe is desired representative of a colour displayed on the monitor which will produce the actual colour when applied to a particular substrate. The database will contain different recipes for the same colour but for application to different substrates. The recipes may be in digital format which, for a perfect screen, would display the called-for colour, and the machine contain programming modifying the instructions to the screen (or printer, as the case may be) to produce the colour called for. The programming may include an algorithm, which will be a method of working out a recipe for example for paints, inks and/or dyes. The computer, in other words, may include programming adapted to modify the instructions on the basis of a different substrate, as outlined above.

The invention will now be described with reference to the drawings, in which:
- Figure 1: is a colour map such as might be used in connection with the invention;
- Figure 2: is of an example of a page of colours from a colour index prepared according to the invention; and
- Figure 3: is a diagrammatic illustration of apparatus useful in connection with the preparation and display of colours in a colour chart according to the invention.

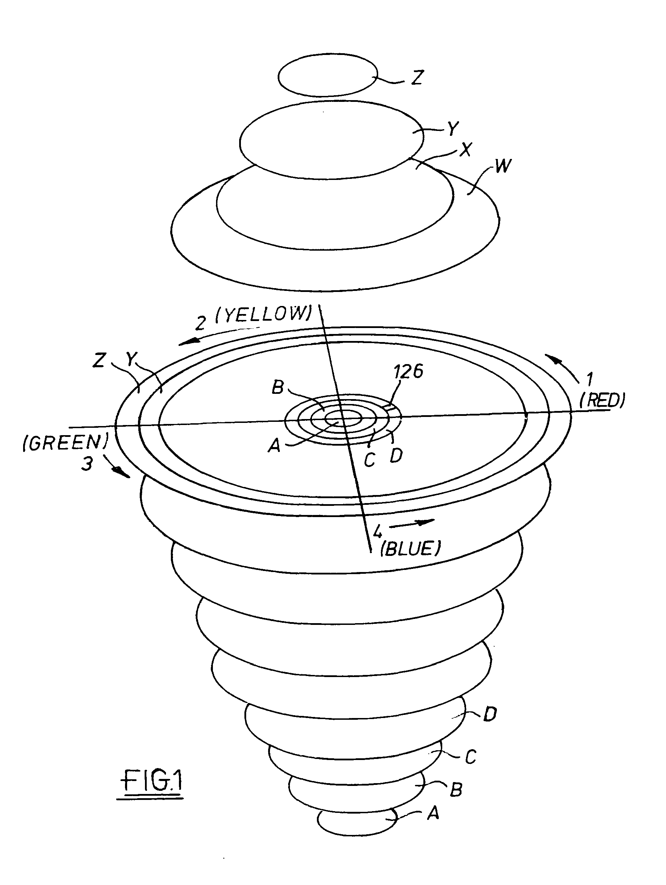

The drawings illustrate a method for preparing a colour chart 11 comprising the steps of
• defining a reference colour, eg black (AA000, Figure 1) or white (ZA000, Figure 1) and
• specifying a range of colours from said reference colour (AA000 or ZA000), each colour being spaced by integral multiples of a preselected colour difference value from any other colour, the range spanning the colour space between the reference colours and some other colour.

The colour difference values are CMC values.

Figure 1 illustrates the coding system. The first letter of the code is an indication of lightness. A being dark, Z being bright, a letter late in the alphabet indicating a lighter colour than a letter earlier in the alphabet.

The lightness/darkness spectrum is depicted in planes A, B......Y, Z.

The second letter denotes to chroma circle, A denoting the "bull's eye", B. D....Z denoting the first, second etc circles outside this, a letter later in the alphabet denoting a less intense shade than one earlier in the alphabet.

The first numeric digit denotes which of the four quadrants the colour appears in, quadrant 1 extending from red to yellow (thereby encompassing orange shades) quadrant 2 extending from yellow to green, quadrant three from green to blue, and quadrant 4 from blue, through purples, back to red.

The next two digits represent the distance around the colour circle from the beginning of the quadrant. Thus 126 represents the twenty sixth point around the first quadrant, thus a reddish orange colour. The full coding BD126 thus represents a point on circle D in the second lightness plane, 26 points around the circle from the beginning of quadrant 1. thus a dark, intense reddish orange colour.

With a little experience, any colour denoted by this coding in the form xxnnn can be fairly readily visualised.

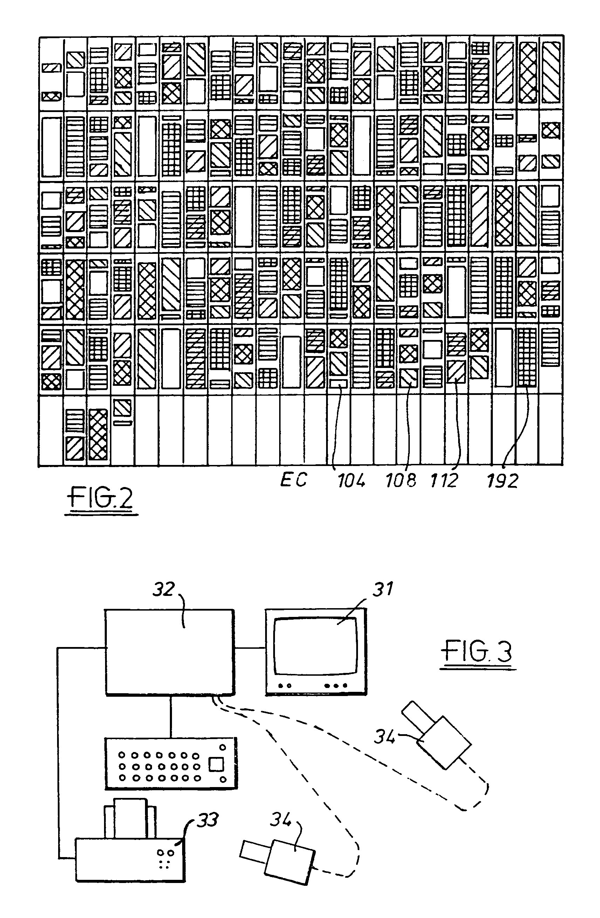

Figure 2 shows a typical page from a compendium of all colours of a colour chart according to the invention. The page, selected, as it were, at random from all the pages labelled AA to ZA, is page EC and contains 25 colours, EC100, EC108, EC106, ... EC192, EC 196. Other pages will be similar. Of course, other configurations can be adopted. The pages can be pages of a paper publication or pages of text and graphics in a computer.

Of course, different coding systems can be adopted, but the one particularly herein described appears well suited for adoption as a standard.

Figure 3 illustrates apparatus for displaying a colour chart comprising a colour video monitor 31 and a computer 32 programmed to specify a range of colours between to reference colours each colour being spaced by an integral multiple of two CMC values from any other colour, the range spanning the colour space between the two reference colours, and the computer 32 being connected to the monitor and controllable to display at least one colour of the range thereon.

A colour printer 33 is also connected to the computer 32 - inasmuch as a printer is essentially a printing VDU, although not so fast in response nor so flexible in operation as a VDU - the colour printer 33 is auxiliary to the video monitor 31. Provision for internal calibration is desirable so that it may be ensured that signals passed to the monitor or printer from the computer always result in the same colour being displayed or printed.

Likewise, adjustment may be made for changes in the appearance of a colour when it is applied to different substrates. This may be done exactly as described, namely by comparing the screen or printed image with a colour on a particular substrate, or the effect of colorants such as dyestuffs on different substrates such as woven or knitted fabrics, fabrics which have and fabrics which have not been bleached, and so on, can be taken into consideration in a database loaded into the computer and consulted when a dye recipe, for example, for dyeing onto ecru cotton fabric is required.

## Claims

1. A method for preparing a colour chart comprising the steps of:
defining a reference colour (XXNNNN) within a colour space
populating the colour space by a range of colours extending from the reference colour, adjacent colours on the chart being spaced apart by a predetermined CMC colour difference value,

2. A method according to claim 1 wherein the reference colour is black.

3. A method according to claim 1 or claim 2 wherein the colour space has dimensions of lightness, chroma and hue.

4. A method according to claim 3 wherein the reference colour defines an origin of the colour space in the lightness dimension

5. A method according to claim 4 wherein the further colour is white.

6. A method according to any one of the preceding claims wherein the colour space is populated within the range by adjacent colours which are spaced apart by at least one CMC colour difference value.

7. A method according to claim 6 wherein the predetermined colour difference value is between 1.8 and 2.2 CMC values.

8. A colour chart containing a range of colours which extend, within a colour space, between a reference colour and a further colour which is different to the reference colour, **characterised in that** the colour space is populated within the range with colour, adjacent colours being spaced apart by a predetermined CMC colour difference value, whereby colours on the chart are separated from each other by integer multiples of said CMC colour difference value.

9. A colour chart according to claim 8 wherein one of the reference colours is black.

10. A colour chart according to claim 8 or claim 9 wherein one of the reference colours is white.

11. A colour chart according to any one of claims 8 to 10 wherein adjacent colours are spaced apart by at least one CMC colour difference value.

12. A colour chart according to claim 1 wherein adjacent colours are spaced apart by between 1.8 and 2.2 CMC colour difference values.

13. A colour chart according to any one of claims 8 to 12, represented digitally.

14. Apparatus for displaying a colour chart, comprising:
a colour video monitor;
the computer being connected to the monitor and controllable to display at least one colour of the range thereon:
**characterised in that**:
the computer is programmed to specify a range of colours which extend, within a colour space, from a reference colour; and
the computer is further programmed to populate the colour space from the reference colour (XXNNNN), adjacent colours being spaced apart by a predetermined CMC colour difference value, whereby colours on the chart are separated from each other by integer multiples of said CMC colour difference value.

15. Apparatus according to claim 14 wherein the monitor is calibratable.

16. Apparatus according to claim 14 or claim 15 wherein the monitor is externally calibratable.

17. Apparatus according to claim 14 comprising a colour printer which is calibratable.

18. Apparatus according to any one of claims 14 to 17, in which the computer contains a database of colour recipes from which a particular recipe is selectable representative of a colour displayed on the monitor, which will reproduce the actual colour when applied to a particular substrate.

19. Apparatus according to claim 18 in which the database contains different recipes for the same colour but for application to different substrates.

20. Apparatus according to claim 18 or claim 19, in which the recipes are in digital format which, for a perfect screen, would display the colour called for, the machine containing programming modifying the instructions to the screen (or printer, as the case may be) to produce the colour called for.

21. Apparatus according to any one of claims 18 to 20, in which the programming includes an algorithm, which is a method of working out a recipe for paints, inks of dyes.

## Patentansprüche

1. Eine Methode zur Vorbereitung einer Farbkarte, die die folgenden Schritte umfasst:
Bestimmen einer Referenzfarbe (XXNNNN) innerhalb eines Farbspektrums
Ausfüllen des Farbspektrums mit einer Auswahl von Farben, die über die Referenzfarbe hinausgehen. Die am nächsten gelegene Farbe auf der Karte wird mit einem im voraus festgesetzten CMC-Wert getrennt, wobei Farben auf der Farbkarte durch ganzzahlige Vielfache des genannten CMC-Farbdifferenzwertes voneinander getrennt werden.

2. Eine Methode gemäß dem Anspruch, bei der die Referenzfarbe schwarz ist.

3. Eine Methode gemäß Anspruch 1 oder Anspruch 2, wo das Farbspektrum Werte der Helligkeit, der Farbsättigung und des Farbtons hat.

4. Eine Methode gemäß Anspruch 3, wo die Referenzfarbe, die Herkunft des Farbspektrums im Helligkeitswert bestimmt.

5. Eine Methode gemäß Anspruch 4, bei der die weitere Farbe weiß ist.

6. Eine Methode gemäß aller vorgenannten Ansprüche, wo das Farbspektrum innerhalb eines Bereichs mit der nächstliegenden Farbe aufgefüllt wird und durch mindestens einen CMC-Farbdifferenzwert unterteilt wird.

7. Eine Methode gemäß Anspruch 6, bei der der im voraus festgelegte Farbdifferenzwert zwischen 1,8 und 2,2 CMC-Werten liegt.

8. Eine Farbkarte, die eine Auswahl von Farben enthält, welche sich innerhalb eines Farbspektrums zwischen einer Referenzfarbe und einer weiteren Farbe befinden, welche sich von der Referenzfarbe unterscheidet und dadurch charakterisiert ist, dass das Farbspektrum sich innerhalb eines Farbbereichs befindet, wobei nächstgelegene Farben, die von einem im voraus festgelegten CMC-Farbdifferenzwert unterteilt werden.

9. Eine Farbkarte gemäß Anspruch 8, bei der eine der Referenzfarben schwarz ist.

10. Eine Farbkarte gemäß Anspruch 8 oder 9, bei der eine der Referenzfarben weiß ist.

11. Eine Farbkarte gemäß einer der Ansprüche 8 bis 10, bei der die nächstgelegene Farbe mindestens einen CMC-Farbdifferenzwert aufweist.

12. Eine Farbkarte gemäß Anspruch 11, wo die nächstgelegenen Farben CMC-Farbdifferenzwerte von 1,8 bis 2,2 aufweisen.

13. Eine Farbkarte gemäß einer der Ansprüche 8 bis 12, die digital dargestellt wird.

14. Eine Vorrichtung zur Anzeige der Farbkarte, bestehend aus: einem Farbvideo-Bildschirm; der Computer ist mit dem Bildschirm verbunden und kann gesteuert werden, um mindestens eine Farbe der folgenden Bereiche anzuzeigen: Der Computer ist so programmiert ist, dass ein Farbbereich, der sich innerhalb eines Farbbereichs mit einer Referenzfarbe befindet und außerdem ist der Computer so programmiert, dass das Farbspektrum (XXNNNN) sich mit der nächstgelegenen Farbe auffüllt und die von einem im voraus festgelegten CMC-Farbdifferenzwert unterteilt wird, wobei Farben auf der Farbkarte voneinander durch ganzzahlige Vielfache mit dem erwähnten CMC-Farbdifferenzwert getrennt werden.

15. Eine Vorrichtung gemäß Anspruch 14, bei der der Bildschirm kalibrierbar ist.

16. Eine Vorrichtung gemäß Anspruch 14 oder 15 bei der der Bildschirm extern kalibrierbar ist.

17. Eine Vorrichtung gemäß Anspruch 14, die einen Farbdrucker beinhaltet, der kalibrierbar ist.

18. Eine Vorrichtung gemäß irgendeiner der Ansprüche 14 bis 17, indem der Computer eine Datenbank von Farbrezepten gespeichert hat, aus der ein bestimmtes Rezept gewählt wird, das mit der Bildschirmanzeige übereinstimmt und dann die tatsächliche Farbe auf ein bestimmtes Trägermaterial reproduziert.

19. Vorrichtung gemäß Anspruch 18, in dem eine Datenbank verschiedene Rezepte für die gleiche Farbe enthält, aber für die Anwendung auf verschiedenen Trägermaterialien bestimmt ist.

20. Vorrichtung gemäß Anspruch 18 oder Anspruch 19, bei welcher die Rezepte in digitalem Format zur perfekten Anzeige der gewünschten Farbe vorhanden sind. Die Maschine enthält programmierte Änderungen der Anweisungen an den Bildschirm (oder gegebenenfalls an den Drucker), um die gewünschte Farbe zu erstellen.

21. Vorrichtung gemäß irgendeiner der Ansprüche 18 bis 20, bei welcher die Programmierung einen Algorithmus enthält, weicher eine Methode zur Erstellung eines Rezepts für Farben, Druckfarben und Farbstoffe darstellt.

## Revendications

1. Un procédé de préparation d'un nuancier comprenant les étapes suivantes :définition d'une couleur de référence (XXNNNN) dans un espace colorimétrique, remplissage de l'espace colorimétrique avec une gamme de couleurs partant de la couleur de référence, les couleurs adjacentes sur le nuancier étant espacées d'une valeur de différence de couleur CMC prédéfinie, moyennant quoi les couleurs du nuancier sont séparées les unes des autres par des multiples entiers de ladite valeur de différence de couleur CMC.

2. Un procédé conforme à la revendication n° 1 dans lequel la couleur de référence est le noir.

3. Un procédé conforme à la revendication n° 1 ou à la revendication n° 2, l'espace colorimétrique ayant des dimensions de luminosité, saturation et teinte.

4. Un procédé conforme à la revendication n° 3, la couleur de référence définissant une origine dans l'espace colorimétrique, dans la dimension de luminosité.

5. Un procédé conforme à la revendication n° 4, la couleur supplémentaire étant le blanc.

6. Un procédé conforme à l'une quelconque des revendications précédentes, l'espace colorimétrique étant renseigné dans la plage de couleurs adjacentes qui sont espacées d'au moins une valeur de différence de couleur CMC.

7. Un procédé conforme à la revendication n° 6, la valeur de différence de couleur prédéfinie étant comprise entre 1,8 et 2,2 valeurs CMC.

8. Un nuancier contenant une plage de couleurs qui s'étendent, au sein d'un espace colorimétrique, entre une couleur de référence et une couleur supplémentaire, différente de la couleur de référence, et **caractérisé en ce que** l'espace colorimétrique est renseigné dans la plage de couleurs, les couleurs adjacentes étant espacées d'une valeur de différence de couleur CMC prédéfinie.

9. Un nuancier conforme à la revendication n° 8, l'une des couleurs de référence étant le noir.

10. Un nuancier conforme à la revendication n° 8 ou à la revendication n° 9, l'une des couleurs de référence étant le blanc.

11. Un nuancier conforme à l'une quelconque des revendications n° 8 à 10, les couleurs adjacentes étant espacées d'au moins une valeur de différence de couleur CMC.

12. Un nuancier conforme à la revendication n° 11, les couleurs adjacentes étant espacées de 1,8 à 2,2 valeurs de différence de couleur CMC.

13. Un nuancier conforme à l'une quelconque des revendications n° 8 à 12, représenté numériquement.

14. Un appareil permettant d'afficher un nuancier, comprenant :un écran vidéo couleur ;l'ordinateur étant connecté à l'écran et pouvant être commandé pour afficher au moins une couleur de la plage :**caractérisé en ce que** :l'ordinateur est programmé pour spécifier une plage de couleurs qui s'étendent, dans un espace colorimétrique, à partir d'une couleur de référence ; l'ordinateur est également programmé pour renseigner l'espace colorimétrique à partir de la couleur de référence (XXNNNN), les couleurs adjacentes étant espacées d'une valeur de différence de couleur CMC prédéfinie, moyennant quoi les couleurs du nuancier sont séparées les unes des autres par des multiples entiers de ladite valeur de différence de couleur CMC.

15. Un appareil conforme à la revendication n° 14, le moniteur pouvant être étalonné.

16. Un appareil conforme à la revendication n° 14 ou à la revendication n° 15, l'écran pouvant être étalonné à l'extérieur.

17. Un appareil conforme à la revendication n° 14, comprenant une imprimante couleur qui peut être étalonnée.

18. Un appareil conforme à l'une quelconque des revendications n° 14 à 17, l'ordinateur contenant une base de données de formules de couleur à partir de laquelle une formule particulière peut être sélectionnée et qui est représentative d'une couleur affichée sur le moniteur ; l'ordinateur reproduira la couleur réelle lorsqu'elle est appliquée à un substrat particulier.

19. Un appareil conforme à la revendication n° 18, la base de données contenant des formules différentes pour une même couleur, destinée à être appliquée sur des substrats différents.

20. Un appareil conforme à la revendication n° 18 ou à la revendication n° 19, dans lequel les formules sont au format numérique qui, pour un écran idéal, afficherait la couleur demandée, la machine contenant une programmation modifiant les instructions pour l'écran (ou une imprimante, le cas échéant), afin de produire la couleur demandée.

21. Un appareil conforme à l'une quelconque des revendications n° 18 à 20, dans lequel la programmation comprend un algorithme, qui est un procédé d'élaboration d'une formule pour les peintures, les encres ou les colorants.
